# EUROPÄISCHE PATENTSCHRIFT

(11) **EP 3 891 408 B1**
(45) Veröffentlichungstag und Bekanntmachung des Hinweises auf die Patenterteilung: **15.03.2023**
(21) Anmeldenummer: 19769375.7
(22) Anmeldetag: 03.09.2019
(51) Int. Cl.: F16C 23/04, F16C 33/12, F16C 33/20, C23C 14/02, C23C 14/06

(54) **GLEITLAGER**
SLIDING BEARING
PALIER GLISSANT

(30) Priorität: 05.12.2018 DE 102018131022
(43) Veröffentlichungstag der Anmeldung: 13.10.2021
(73) Patentinhaber: Schaeffler Technologies AG & Co. KG, 91074 Herzogenaurach (DE)
(72) Erfinder: KURSAWE, Serge, 91080 Uttenreuth (DE); WEITKAMP, Thomas, 32139 Spenge (DE); PODGAYNYY, Nikolay, 91325 Adelsdorf (DE); BOLTE, Frank, 49324 Melle (DE); KÖNIG, Thomas, 91341 Röttenbach (DE)
(86) Internationale Anmeldenummer: PCT/DE2019/100789
(87) Internationale Veröffentlichungsnummer: WO 2020/114537

(56) Entgegenhaltungen:
- DE-A1- 19 850 346
- DE-A1-102012 219 930
- DE-C1- 4 414 051
- US-A1- 2014 140 646

## Beschreibung

Die Erfindung betrifft ein Gleitlager, insbesondere in Form eines Gelenklagers.

Ein Bauteil mit einer Gleitstruktur, welches unter anderem als Gleitlagerbuchse, als Teil einer Linearführung oder als Gelenklagerring ausgeführt sein kann, ist zum Beispiel in der DE 10 2014 224 310 A1 offenbart. Die Gleitstruktur des Bauteils umfasst einen Grundkörper und eine zumindest abschnittsweise auf dem Grundkörper angeordnete Gleitschicht. Als Werkstoff des Grundkörpers ist ein Kunststoff vorgesehen. Die Gleitschicht weist dagegen einen anorganischen Werkstoff auf. Hierbei kann es sich um einen metallischen oder nichtmetallischen Werkstoff handeln, beispielsweise Titan, Titannitrid, diamantähnlichen Kohlenstoff (DLC), Silber, Gold, Chrom, Chromnitrid oder Wolfram. Optional weist die Gleitstruktur der Vorrichtung nach der DE 10 2014 224 310 A1 eine Faltenstruktur auf. Durch diese Faltenstruktur soll ein Speicherreservoir für ein Schmiermedium zur Verfügung gestellt werden.

Aus der DE 10 2014 107 036 A1 ist ein Gelenklager mit beschichteter Titankugel bekannt. Das Gelenklager umfasst einen in einer Büchse drehbar angeordneten Innenring, welcher mit einer DLC-Beschichtung versehen sein kann. Zwischen dem Innenring und der Büchse kann ein Gleitmittel in Form einer Folie angeordnet sein.

Die US 2014 / 0 140 646 A1 beschreibt ein selbstausrichtendes Laufrollenlager umfasst ein inneres Element mit einer zentralen Achse und einer konvexen Oberfläche und ein äußeres Element mit einer konkaven Oberfläche, das in Bezug auf die zentrale Achse winklig verschiebbar ist. Zwischen der konvexen Oberfläche und der konkaven Oberfläche befindet sich eine gleitfähige Auskleidung.

Die DE 10 2008 037 871 A1 beschreibt ein Gleitelement mit einer Mehrfachschicht, welche aus einer innenliegenden Schutzschicht und einer außenliegenden Laufschicht aufgebaut ist. Die Schutzschicht kann beispielsweise DLC, Me-DLC, insbesondere W-DLC, Ti-DLC oder Cr-DLC, Siliziumnitrid oder Mischungen dieser Materialien enthalten. Die Schutzschicht kann sich auf einer strukturierten Oberfläche befinden, welche eine Vielzahl von Vertiefungen und Erhöhungen aufweist. Als Laufschicht, welche die Schutzschicht abdeckt, wird unter anderem ein Gleitlack vorgeschlagen. Ebenso ist gemäß der DE 10 2008 037 871 A1 die Verwendung einer Laufschicht, welche ein Metall enthält, möglich.

Die WO 2006/093319 A1 beschreibt eine Anordnung, welche zur Verwendung in einem Kompressor vorgesehen ist und Dichtungs- sowie Lagerungseigenschaften haben soll. Eine Komponente dieser Anordnung ist mit einer diamantartigen Beschichtung versehen.

Die DE 198 50 346 A1 offenbart eine Diamantschicht mit optimierten Oberflächeneigenschaften, insbesondere zur Verbesserung tribologischer Eigenschaften von damit beschichteten Werkzeugen oder Bauteilen. Die Diamantschicht weist eine (100)-Textur mit definiert einstellbarer Oberflächenrauigkeit und in etwa gleichförmigen Vertiefungen auf. Auf die Diamantschicht werden zur Reibungsminimierung weitere Materialien aufgetragen.

Die DE 100 61 397 A1 offenbart ein Planetengetriebe, dessen Planetenräder auf Planetenachsen in flüssig- oder fettgeschmierten Gleitlagern gelagert sind. Diese Gleitlager weisen Hartstoff-Lagerflächen auf. Als mögliche Hartstoffe werden Keramik, Hartmetall und Kaltarbeitsstahl genannt.

Aus der DE 69 330 10 U ist ein Gelenklager bekannt, welches einen Außenring aufweist, in dem eine Hülse schwimmend gelagert ist. Diese Hülse ist einseitig, und zwar auf ihrer dem Außenring abgekehrten Innenseite, mit Polytetrafluorethylen (PTFE) beschichtet.

Ein weiteres Gelenklager ist in der DE 10 2004 041 084 B4 offenbart. Dieses Gelenklager weist einen in zwei Hälften geteilten Außenring auf, dessen Innenfläche der Oberfläche eines Innenrings angepasst ist. Die beiden Hälften des Außenrings sind durch eine Umhausung miteinander verbunden. Die Umhausung kann in Form eines Metallrings vorliegen oder aus einem Faserverbundwerkstoff gewickelt sein.

Aus den Dokumenten DE 10 2007 053 529 A1 und DE 10 2007 053 528 A1 sind Gleitlager mit abnehmbaren Gleitbelägen bekannt.

Die DE 44 14 051 C1 beschreibt einen reibarmen Schichtverbund für Bauteile aus metallischen Werkstoffen. Dabei wird eine nanodisperse Zwischenschicht aus Cr₃Si oder Chrom mittels Hochfrequenz-Magnetronzerstäubung gebildet und darauf mittels Hochfrequenz-Magnetronzerstäubung eine nanodisperse MoSₓ-Schicht gebildet.

Der Erfindung liegt die Aufgabe zugrunde, ein gegenüber dem genannten Stand der Technik weiterentwickeltes Gleitlager anzugeben, wobei rationelle, umweltfreundliche Fertigungsmöglichkeiten gegeben sein sollen.

Diese Aufgabe wird erfindungsgemäß gelöst durch ein Gleitlager mit den Merkmalen des Anspruchs 1. Insbesondere ist das Gleitlager ein Gelenklager. Im Folgenden im Zusammenhang mit dem Herstellungsverfahren erläuterte Ausgestaltungen und Vorteile der Erfindung gelten sinngemäß auch für das Lagerelement sowie für das Gleitlager, welches dieses Lagerelement umfasst.

Teile des Gleitlagers sind ein erstes Lagerelement, welches an einer Oberfläche eine Strukturierung aufweist und mehrlagig beschichtet ist, wobei eine innere Schicht mittels eines Gasphasen-Abscheideverfahrens auf einem Grundwerkstoff des ersten Lagerelementes abgeschieden ist und die Strukturierung abbildet, wobei die innere Schicht des ersten Lagerelementes als amorphe Kohlenstoffschicht ausgebildet ist oder wobei die innere Schicht des ersten Lagerelementes mindestens einen Hartstoff enthält, welcher aus der Gruppe an Hartstoffen ausgewählt ist, die nitridische Hartstoffe, karbidische Hartstoffe und oxidische Hartstoffe enthält, und eine äußere Schicht, die als die Strukturierung der inneren Schicht egalisierende PTFE-Imprägnierschicht ausgebildet ist, sowie mit einem zweiten Lagerelement, welches einen PTFE enthaltenden Gleitbelag aufweist, wobei der Gleitbelag des zweiten Lagerelementes ein PTFE-Gewebe in einer Harzmatrix enthält oder einen Metall-Polymer-Verbundwerkstoff umfassend gesinterte Bronze und PTFE umfasst.

Die Strukturierung der inneren Schicht des ersten Lagerelementes ist hierbei an die Oberflächenstruktur des Grundwerkstoffs des ersten Lagerelementes angepasst und liegt beispielsweise in Form einzelner, voneinander beabstandeter Vertiefungen vor.

Die innere Schicht wird erfindungsgemäß mit Hilfe eines Gasphasen-Abscheideverfahrens auf dem Grundwerkstoff des ersten Lagerelementes abgeschieden. Unter den Begriff Gasphasen-Abscheideverfahren werden PVD (physical vapor deposition)-Verfahren, PACVD (plasma assisted chemical vapor deposition)-Verfahren, PECVD (plasma enhanced chemical vapor deposition)-Verfahren sowie CVD (chemical vapor deposition)-Verfahren subsumiert. All diesen Abscheideverfahren ist gemeinsam, dass die Schicht im Gegensatz zur zum Prioritätszeitpunkt mehrheitlich verwendeten Hartverchromung ohne die Verwendung Chrom (VI)-haltiger Substanzen auf dem Lagerelement abgeschieden wird.

Bei der PTFE-Imprägnierschicht handelt es sich um eine Schicht, welche ausschließlich oder zu mindestens 98 %, insbesondere zu mindestens 99 %, aus Polytetrafluorethylen gebildet ist. Die PTFE-Imprägnierschicht unterscheidet sich somit von im Stand der Technik (DE 10 2008 037 871 A1) beschriebenen Laufschichten in Form eines Gleitlacks, welcher PTFE in einem thermoplastischen Harz enthält.

Die innere Schicht des ersten Lagerelementes liegt in einer ersten Ausgestaltung als diamantähnliche amorphe Kohlenstoffschicht, das heißt DLC (diamond like carbon)-Schicht vor. Hierbei kann es sich um eine wasserstoffhaltige amorphe Kohlenstoffschicht handeln, welche allgemein mit a-C:H bezeichnet wird.

Die innere Schicht des ersten Lagerelements des Gleitlagers kann, sofern es sich um eine Kohlenstoffschicht handelt, eine metallische und/oder nichtmetallische Dotierung aufweisen. Allgemein werden metallhaltige Kohlenstoffschichten mit a-C:H:Me bezeichnet. Bei dem Metall Me handelt es sich zum Beispiel um Wolfram, Titan, Silizium oder Tantal. Mit Wolfram als Dotierungselement ergibt sich die Bezeichnung a-C:H:W. Eine ein Nichtmetall enthaltende Beschichtung, mit a-C:H:X bezeichnet, wobei Xfür ein Nichtmetall steht, ist ebenfalls einsetzbar.

Alternativ zu einer dotierten Kohlenstoffschicht kann als innere Schicht des erstens Lagerelementes auch eine wasserstofffreie Kohlenstoffschicht, welche allgemein als a-C oder ta-C bezeichnet wird, verwendet werden.

Was die Abscheidung von CVD-Diamantschichten, wie sie beim ersten Lagerelement des Gleitlagers möglich ist, betrifft, wird zum technologischen Hintergrund ergänzend auf die EP 0 487 897 B1 hingewiesen.

In einer alternativen Ausgestaltung enthält die innere Schicht Hartstoff in Form eines nitridischen, karbidischen oder oxidischen Hartstoffs oder ist vollständig aus diesem gebildet ist und liegt als Hartstoffschicht vor. Als Beispiele sind TiN, TiCN, Al₂O₃, Ti-AlN, CrN und AlCrN zu nennen. Auch Mischformen umfassen zwei oder mehrere dieser Materialien, optional mit Dotierung(en), sind als innere Schicht des ersten Lagerelementes geeignet.

Ein bevorzugtes Material für die innere Schicht ist MoN/Cu, von der Anmelderin unter Triondur MN angeboten. Dabei werden abwechselnd MoN und Kupfer in dünnen Lagen abgeschieden, so dass die innere Schicht durch eine Schichtfolge gebildet ist. Darauf wird dann die PTFE-Imprägnierschicht als äußere Schicht gebildet.

Alle vorstehend genannten Bestandteile der inneren Schicht der mehrlagigen Beschichtung des ersten Lagerelementes sind in beliebiger Weise miteinander kombinierbar. In allen Fällen ist die Härte der inneren Schicht - unabhängig vom angewandten Messverfahren - bei weitem größer als die Härte der PTFE-Imprägnierschicht. Die PTFE-Imprägnierschicht bietet die Möglichkeit, im Betrieb des Gleitlagers auftretende Partikel, insbesondere durch Abrieb entstehende Partikel, aufzunehmen, wobei durch die Strukturierung der inneren Schicht Räume für die Aufnahme solcher Partikel bereitgestellt sind. Trotz möglicher einzelner Verletzungen der PTFE-Imprägnierschicht bleibt somit die durch PTFE gebildete Gleitlageroberfläche beim Betrieb des Gleitlagers weitestgehend erhalten, wobei auch Selbstheilungseffekte innerhalb der PTFE-Imprägnierschicht gegeben sind.

Das erste Lagerelement ist vorzugsweise metallisch ausgebildet, insbesondere aus Stahl.

Das zweite Lagerelement ist in einer nicht erfindungsgemäßen Variante insbesondere mittels gewickelter PTFE-Fasern verstärkt und insgesamt aus Kunststoff gebildet. Neben den PTFE- Fasern können zusätzlich Stützfasern, insbesondere aus Kunststoff, Metall, Glas, Kohlenstoff oder Keramik vorhanden sein, wobei diese allein oder in beliebiger Kombination miteinander vorhanden sein können.

In einer erfindungsgemäßen Variante ist das zweite Lagerelement, bevorzugt ein metallisches Lagerelement, mit dem Gleitbelag versehen. Der Gleitbelag ist insbesondere mit dem metallischen zweiten Lagerelement verklebt und mit PTFE-Fasern verstärkt. Als Fasern zur Verstärkung des Gleitbelags kommen generell textile Materialien wie Gewebe, Gewirke, Gestricke und dergleichen zum Einsatz. Neben den PTFE-Fasern können zusätzlich Stützfasern, insbesondere aus einem anderen Kunststoff, aus Metall, aus Glas, aus Kohlenstoff oder aus Keramik vorhanden sein, wobei diese allein oder in beliebiger Kombination miteinander vorhanden sein können. Der Gleitbelag enthält in bevorzugter Ausgestaltung ein PTFE-Gewebe in einer Harzmatrix. Alternativ weist der Gleitbelag eine Schicht aus gesinterter Bronze auf, die mit einer PTFE-Schicht versehen ist, so dass im Bereich des Gleitkontakts ein Metall-Polymer-Verbundmaterial vorliegt.

Bei dem ersten Lagerelement kann es sich um den Innenring oder den Außenring eines Gelenklagers handeln. Insbesondere sind der Innenring und/oder der Außenring aus Stahl gebildet. So weist bevorzugt der Innenring die Beschichtung auf, während der Außenring den Gleitbelag aufweist. Aber auch eine inverse Anordnung ist möglich.

Nachfolgend wird ein Ausführungsbeispiel der Erfindung anhand der Zeichnungen näher erläutert. Hierin zeigen:
- Fig. 1: ein erfindungsgemäßes Gleitlager in einer schematischen Schnittdarstellung,
- Fig. 2: in schematischer Darstellung eine vergrößerte Darstellung der Figur 1 im Bereich des Gleitkontakts,
- Fig. 3: in einer Darstellung analog zu Figur 2 den Detail-Aufbau der Gleitlagerung der Vorrichtung nach Figur 1.

Einander entsprechende oder prinzipiell gleichwirkende Teile sind in allen Figuren mit den gleichen Bezugszeichen gekennzeichnet.

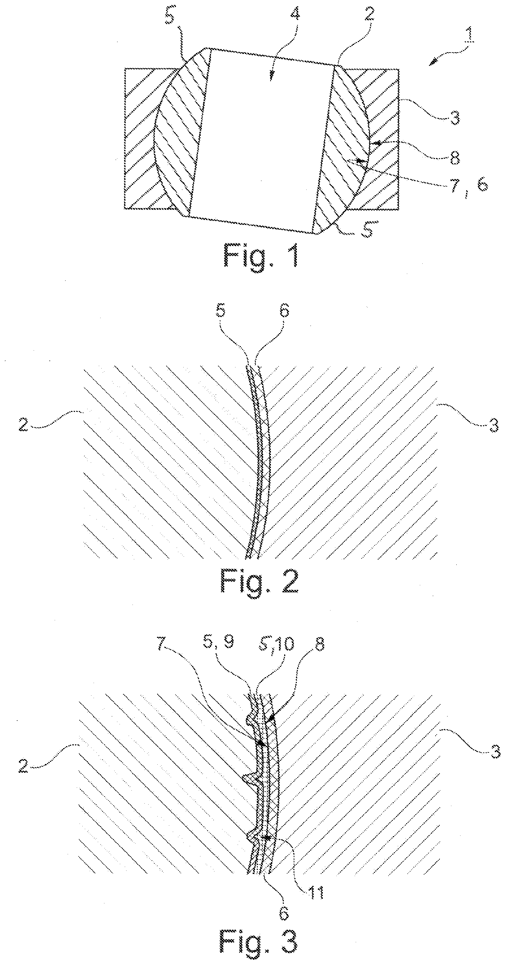

Ein in Fig. 1 insgesamt mit dem Bezugszeichen 1 gekennzeichnetes Gleitlager, nämlich ein Gelenklager, ist aus einem ersten, inneren Lagerelement 2 und einem zweiten, äußeren Lagerelement 3 gebildet. Das erste Lagerelement 2 weist eine zentrale Öffnung 4 zur Verbindung mit einem nicht dargestellten Anschlussteil auf. Das erste Lagerelement 2 weist eine Beschichtung 5 umfassend die innere Schicht 9 und die äußere Schicht 10 (vergleiche Figur 3) auf der konvexen Außenoberfläche 8 auf. Das zweite Lagerelement 3 weist einen Gleitbelag 6 auf der konkaven Innenoberfläche 7 auf.

Figur 2 zeigt einen vergrößerten Ausschnitt aus Figur 1 im Bereich des Gleitkontakts. Das erste Lagerelement 2 ist mit der Beschichtung 5 und das zweite Lagerelement 3 mit dem Gleitbelag 6 versehen, welche sich hinsichtlich ihrer Härte deutlich voneinander unterscheiden. Beispielsweise umfasst die Beschichtung 5 eine innere Schicht 9 in Form einer Hartstoffschicht, wogegen der Gleitbelag 6, welcher sich im zweiten Lagerelement 3 eingeklebt befindet, hier ein PTFE-Gewebe in einer Harzmatrix enthält.

Zur Herstellung des Gleitlagers 1 nach den Figuren 1 bis 3 wird kein Chrom VI-haltiger Elektrolyt benötigt. Vielmehr wird auf dem Grundwerkstoff des ersten Lagerelementes 2 zunächst mittels Gasphasenabscheidung die innere Schicht 9 abgeschieden. Der Grundwerkstoff ist hier metallisch ausgebildet, insbesondere aus Stahl. Die innere Schicht 9 weist eine im Wesentlichen einheitliche Dicke auf. Hierdurch passt sich die Oberfläche der inneren Schicht 9 der gegebenen Struktur des Grundwerkstoffs, welche Vertiefungen 11 als Strukturierung aufweist, an.

Nach dem Abscheiden der inneren Schicht 9 unmittelbar auf der Oberfläche des metallischen Grundwerkstoffs des Lagerelementes 2 wird eine PTFE-Imprägnierschicht als äußere Schicht 10 auf die innere Schicht 9 aufgetragen. Durch die PTFE-Imprägnierschicht werden die als Strukturierung 11 vorliegenden Unebenheiten und Vertiefungen 11 der inneren Schicht 9 egalisiert, so dass sich eine glatte, im vorliegenden Fall sphärische, Außenoberfläche des Lagerelementes 2 ergibt.

Im Unterschied zum mehrlagig beschichteten ersten Lagerelement 2 ist das zweite Lagerelement 3 mit einem Gleitbelag 6 versehen, der aufgeklebt ist. Ein Gleitbelag 6 ist in diesem Fall durch ein PTFE-Gewebe eingebettet in eine Harzmatrix gebildet oder durch ein Metall-Polymer-Verbundmaterial enthaltend gesinterte Bronze und PTFE. Insgesamt ist durch den Gleitbelag 6 eine konkave Innenoberfläche 7 des Lagerelementes 3 gebildet. Durch die Beschichtung 5 des ersten Lagerelementes 2 ist eine die Innenoberfläche 7 kontaktierende konvexe Außenoberfläche 8 gebildet.

### Bezugszeichenliste

- 1: Gleitlager, Gelenklager
- 2: Lagerelement
- 3: Lagerelement
- 4: Öffnung
- 5: Beschichtung des Lagerelementes 2
- 6: Gleitbelag des Lagerelementes 3
- 7: konkave Innenoberfläche
- 8: konvexe Außenoberfläche
- 9: innere Schicht
- 10: äußere Schicht
- 11: Strukturierung, Vertiefung

## Patentansprüche

1. Gleitlager, mit einem ersten Lagerelement (2), welches an einer Oberfläche eine Strukturierung (11) aufweist, die mehrlagig beschichtet ist, wobei eine innere Schicht (9) mittels eines Gasphasen-Abscheideverfahrens auf einem Grundwerkstoff des ersten Lagerelementes abgeschieden ist und die Strukturierung (11) abbildet, wobei die innere Schicht (9) des ersten Lagerelementes (2) als amorphe Kohlenstoffschicht ausgebildet ist oder wobei die innere Schicht (9) des ersten Lagerelementes (2) mindestens einen Hartstoff enthält, welcher aus der Gruppe an Hartstoffen ausgewählt ist, die nitridische Hartstoffe, karbidische Hartstoffe und oxidische Hartstoffe enthält, und wobei eine äußere Schicht (10) als die Strukturierung (11) der inneren Schicht (9) egalisierende PTFE-Imprägnierschicht ausgebildet ist, sowie mit einem zweiten Lagerelement (3), welches einen PTFE enthaltenden Gleitbelag (6) aufweist, wobei der Gleitbelag (6) des zweiten Lagerelementes (3) ein PTFE-Gewebe in einer Harzmatrix enthält oder einen Metall-Polymer-Verbundwerkstoff umfassend gesinterte Bronze und PTFE umfasst.

2. Gleitlager nach Anspruch 1, **dadurch gekennzeichnet, dass** die amorphe Kohlenstoffschicht mindestens ein Dotierungselement enthält.

3. Gleitlager nach Anspruch 2, **dadurch gekennzeichnet, dass** die amorphe Kohlenstoffschicht metallische sowie nichtmetallische Dotierungselemente enthält

4. Gleitlager nach Anspruch 1, **dadurch gekennzeichnet, dass** als amorphe Kohlenstoffschicht eine wasserstofffreie Kohlenstoffschicht vorgesehen ist.

5. Gleitlager nach Anspruch 1, **dadurch gekennzeichnet, dass** die innere Schicht (9) vollständig aus dem Hartstoff gebildet ist.

6. Gleitlager nach Anspruch 1 oder 5, **dadurch gekennzeichnet, dass** der Hartstoff mindestens eines der Elemente Titan, Aluminium, Chrom und Molybdän enthält.

7. Gleitlager nach Anspruch 6, **dadurch gekennzeichnet, dass** der Hartstoff aus TiN, TiCN, Al₂O₃, TiAIN, CrN, AlCrN oder einer Kombination dieser Materialien gebildet ist.

8. Gleitlager nach Anspruch 1, **dadurch gekennzeichnet, dass** die innere Schicht durch eine Schichtfolge gebildet ist, die abwechselnd MoN und Kupfer in dünnen Lagen umfasst.

9. Gleitlager nach einem der Ansprüche 1 bis 8, **dadurch gekennzeichnet, dass** die Strukturierung (11) in Form einzelner, voneinander beabstandeter Vertiefungen vorliegt.

## Claims

1. A sliding bearing having a first bearing element (2), which has a structure (11) on a surface, which bearing element is coated in multiple layers, wherein an inner layer (9) is deposited on a base material of the first bearing element by means of a vapour deposition method, and which inner layer forms a structure (11), wherein the inner layer (9) of the first bearing element (2) is formed as an amorphous carbon layer or wherein the inner layer (9) of the first bearing element (2) contains at least one resin, which is selected from the group of resins that contains nitride resins, carbide resins and oxide resins, and wherein an outer layer (10) is designed as a PTFE impregnation layer levelling the structure (11) of the inner layer (9), as well as having a second bearing element (3) having a PTFE-containing sliding lining (6), wherein the sliding lining (6) of the second bearing element (3) contains a PTFE fabric in a resin matrix or comprises a metal-polymer composite comprising sintered bronze and PTFE.

2. The sliding bearing according to claim 1, **characterised in that** the amorphous carbon layer contains at least one doping element.

3. The sliding bearing according to claim 2, **characterised in that** the amorphous carbon layer contains metallic and non-metallic doping elements.

4. The sliding bearing according to claim 1, **characterised in that** a hydrogen-free carbon layer is provided as the amorphous carbon layer.

5. The sliding bearing according to claim 1, **characterised in that** the inner layer (9) is formed completely of the resin.

6. The sliding bearing according to claim 1 or 5, **characterised in that** the resin contains at least one of the elements titanium, aluminium, chromium and molybdenum.

7. The sliding bearing according to claim 6, **characterised in that** the resin is formed from TiN, TiCN, Al₂O₃, TiAIN, CrN, AlCrN or a combination of these materials.

8. The sliding bearing according to claim 1, **characterised in that** the inner layer is formed by a layer sequence comprising alternating MoN and copper in thin layers.

9. The sliding bearing according to any one of claims 1 to 8, **characterised in that** the structure (11) is in the form of individual depressions spaced apart from each other.

## Revendications

1. Palier glissant, avec un premier élément de palier (2) qui présente sur une surface une structuration (11) qui est revêtue de plusieurs couches, une couche intérieure (9) étant déposée sur un matériau de base du premier élément de palier au moyen d'un procédé de dépôt en phase gazeuse et reproduisant la structuration (11), la couche intérieure (9) du premier élément de palier (2) étant réalisée sous forme de couche de carbone amorphe ou la couche intérieure (9) du premier élément de palier (2) contenant au moins une substance dure choisie dans le groupe de substances dures qui contient des substances dures nitrurées, des substances dures carburées et des substances dures oxydées, et une couche extérieure (10) étant réalisée sous forme de couche d'imprégnation de PTFE égalisant la structuration (11) de la couche intérieure (9), ainsi qu'avec un second élément de palier (3) qui présente un revêtement glissant (6) contenant du PTFE, le revêtement glissant (6) du second élément de palier (3) contenant un tissu de PTFE dans une matrice de résine ou comprenant un matériau composite métal-polymère comprenant du bronze fritté et du PTFE.

2. Palier glissant selon la revendication 1, **caractérisé en ce que** la couche de carbone amorphe contient au moins un élément de dopage.

3. Palier glissant selon la revendication 2, **caractérisé en ce que** la couche de carbone amorphe contient des éléments de dopage métalliques et non métalliques.

4. Palier glissant selon la revendication 1, **caractérisé en ce qu'**une couche de carbone exempte d'hydrogène est prévue à titre de couche de carbone.

5. Palier glissant selon la revendication 1, **caractérisé en ce que** la couche intérieure (9) est entièrement formée du matériau dur.

6. Palier glissant selon la revendication 1 ou 5, **caractérisé en ce que** le matériau dur contient au moins un des éléments titane, aluminium, chrome et molybdène.

7. Palier glissant selon la revendication 6, **caractérisé en ce que** le matériau dur est formé de TiN, TiCN, Al₂O₃, TiAIN, CrN, AlCrN ou d'une combinaison de ces matériaux.

8. Palier glissant selon la revendication 1, **caractérisé en ce que** la couche interne est formée par une succession de couches comprenant alternativement du MoN et du cuivre en couches minces.

9. Palier glissant selon l'une quelconque des revendications 1 à 8, **caractérisé en ce que** la structuration (11) se présente sous la forme de cavités individuelles espacées les unes des autres.
